# EUROPÄISCHE PATENTANMELDUNG

(11) **EP 2 733 165 A1**
(43) Veröffentlichungstag der Anmeldung: **21.05.2014**
(21) Anmeldenummer: 12193424.4
(22) Anmeldetag: 20.11.2012
(51) Int. Cl.: C08K 3/04, C08K 3/30, C08J 9/00, C08L 25/04

(54) **Verfahren zur herstellung von halogenfrei flammgeschützten styrolpolymerschaumstoffen**

(71) Anmelder: BASF SE, 67056 Ludwigshafen (DE)
(72) Erfinder: Däschlein, Christian, 68199 Mannheim (DE); Fuchs, Sabine, 68167 Mannheim (DE); Hahn, Klaus, 67281 Kirchheim (DE); Fischer, Horst, 67454 Hassloch (DE)

(57) **Zusammenfassung**

Ein Verfahren zur Herstellung von Schwefel als Flammschutzmittel enthaltenden, expandierbaren Styrolpolymergranulaten oder Extrusionsschaumstoffen auf Basis von Styrolpolymeren, bei dem elementarer Schwefel in eine Styrolpolymerschmelze bei einer Temperatur im Bereich von 170 bis 220°C eingearbeitet wird, nach dem Verfahren erhältliche expandierbare Styrolpolymerisate sowie die Verwendung einer Mischung von elementarem Schwefel und ein oder mehrerer athermaner Verbindungen in Styrolpolymerschaumstoffen.

## Beschreibung

Die vorliegende Erfindung betrifft ein Verfahren zur Herstellung von Schwefel als Flammschutzmittel enthaltenden, expandierbaren Styrolpolymergranulaten oder Extrusionsschaumstoffen auf Basis von Styrolpolymeren.

Die Ausrüstung von Schaumstoffen mit Flammschutzmitteln ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden.

Derzeit werden als Flammschutzmittel in Kunststoffen hauptsächlich polyhalogenierte Kohlenwasserstoffe, gegebenenfalls in Kombination mit geeigneten Synergisten, beispielsweise organischen Peroxiden oder Stickstoffhaltigen Verbindungen eingesetzt. Ein typischer Vertreter dieser klassischen Flammschutzmittel ist Hexabromcyclododecan (HBCD), welches beispielsweise in Polystyrol Anwendung findet. Aufgrund von Verdacht auf Bioakkumulation sowie Persistenz von einigen polyhalogenierten Kohlenwasserstoffen ist es ein großes Bestreben in der Kunststoffindustrie, halogenierte Flammschutzmittel zu substituieren.

Flammschutzmittel sollten nach Möglichkeit neben einer hohen Flammschutzwirkung im Schaumstoff bei niedriger Beladung für die Verarbeitung auch ausreichende Temperatur- und Hydrolysestabilität aufweisen. Des Weiteren sollten sie keine Bioakkumulation sowie Persistenz aufweisen.

Aus der DE 1 694 945 ist ein Verfahren zur Herstellung von schwer entflammbaren Schaumstoffen bekannt, bei dem Schwefel mit vorgeschäumten Polystyrolperlen vermischt und zu Schaumstoffformkörpern verschweißt werden.

In Polymer Degradation and Stability 93 (2008) 1664 - 1673 beschreiben M. Beach et al den Polymerabbau von Polystyrol aufgrund des Zusatzes verschiedener Flammschutzmittel wie, HBCD, und Schwefel. Polystyrolschaumstoffe wurden nicht untersucht.

Die EP 0 806 451 und WO 99/10429 beschreiben flammgeschützte Styrolpolymerzusammensetzungen, die eine Kombination von organischen Phosphorverbindungen und elementarem Schwefel enthalten, wobei der Schwefel im Unterschuss eingesetzt wird.

Die Verwendung von elementarem Schwefel als Flammschutzsynergist in Verbindung mit Phosphorverbindungen als Flammschutzmittel in Polymerschaumstoffen ist beispielsweise in WO 2011/083009 und WO 2011/095540 beschrieben.

Die Verwendung von Schwefelverbindungen oder elementarem Schwefel als Flammschutzsynergisten kann unter den Bedingungen der Einarbeitung in das Polymer zur Bildung stark riechender Nebenprodukte, wie Schwefelwasserstoff, Schwefeldioxid, Mercaptanen, Sulfiden oder Thiolen führen, was durch chemische Reaktion mit den übrigen Flammschutzmittelkomponenten, beispielsweise Abbaureaktionen, noch verstärkt werden kann.

Die WO 2012/024709 beschreibt flammgeschützte, wärmedämmende Polymerschaumstoffe und Verfahren zu deren Herstellung, bei denen athermane Kohlenstoffpartikel eingesetzt werden, die vorzugsweise einen Gehalt von 1,2 - 7 Gew.-% Schwefel aufweisen. Der in dieser Form eingesetzte Schwefel zeigt einen synergistischen Effekt in Verbindung mit Flammschutzmitteln, wie organischen Bromverbindung oder Phosphorverbindungen und ist weitgehend frei von Geruchsbelastung.

Aufgabe der vorliegenden Erfindung war es, den genannten Nachteilen abzuhelfen und ein Verfahren zur Herstellung von Schwefel als Flammschutzmittel enthaltenden, expandierbaren Styrolpolymerisaten oder Extrusionsschaumstoffen auf Basis von Styrolpolymeren bereitzustellen, welches ohne Zusatz von halogenhaltigen Flammschutzmitteln schon in geringen Mengen einen ausreichenden Flammschutz in Styrolpolymerschaumstoffen bewirkt und bei der Verarbeitung nicht zu Geruchsbelästigung führt.

Die Aufgabe wurde durch ein Verfahren zur Herstellung von Schwefel als Flammschutzmittel enthaltenden, expandierbaren Styrolpolymergranulaten oder Extrusionsschaumstoffen auf Basis von Styrolpolymeren, gelöst bei dem elementarer Schwefel und mindestens eine athermane Verbindung in eine Styrolpolymerschmelze bei einer Temperatur im Bereich von 170 bis 220°C eingearbeitet wird.

Als Styrolpolymere können Polystyrol (GPPS), Schlagzähpolystyrol (HIPS), anionisch polymerisiertes Polystyrol oder Schlagzähpolystyrol (A-IPS), Styrol-α-Methylstyrol-Copolymere (SAM), Acrylnitril-Butadien-Styrolpolymerisate (ABS), Styrol-Acrylnitril-Copolymere (SAN), Acrylnitril-Styrol-Acrylester-Copolymere (ASA), Methyacrylat-Butadien-Styrol-Copolymere (MBS), Methylmethacrylat-Acrylnitril-Butadien-Styrol-Copolymere (MABS), Styrol-Maleinsäureanhydrid-Copolymere (SMA), Styrol-Phenylmaleinsäureimid-Copolymere (SPMI), Styrol-Maleinsäureanhydrid-Phenylmaleinimid-Terpolymere (SMAPMI), Styrol-Acrylnitril-Maleinsäureanhydrid-Terpolymere (SANMA) oder Mischungen davon eingesetzt werden. Bevorzugt wird Polystyrol eingesetzt.

In dem erfindungsgemäßen Verfahren werden bevorzugt 1 bis 10 Gewichtsteile, besonders bevorzugt 3 bis 6 Gewichtsteile elementarer Schwefel auf 100 Gewichtsteile Styrolpolymer eingesetzt. Der elementare Schwefel wird erfindungsgemäß bei einer Schmelzetemperatur (Einarbeitungstemperatur) im Bereich von 170 bis 220 °C, bevorzugt im Bereich von 180 bis 215 °C, besonders bevorzugt im Bereich von 190 bis 210 °C in die Styrolpolymerschmelze eingearbeitet.

Überraschenderweise kann elementarer Schwefel in geringen Mengen als alleiniger Flammschutz in Schaumstoffe auf Basis von Styrolpolymerisaten sehr wirksam, sein, wenn er erfindungsgemäß bei einer Temperatur im Bereich von 170 bis 220 °C eingearbeitet wird. Er hat somit entgegen den gängigen Erkenntnissen nicht die Rolle eines Synergisten, sondern wirkt als Flammschutzmittel selbst. Bei der Verwendung temperaturlabiler Flammschutzmittel in Kombination mit Schwefel-haltigen Synergisten erfolgte die Einarbeitung bislang bei niedrigeren Temperaturen.

Üblicherweise führt das Einarbeiten von Schwefel bei Temperaturen unter 170 °C zu einer Erniedrigung der Glasübergangstemperatur (Tg) der Styrolpolymermatrix im Schaumstoff von bis zu 10 °C in Abhängigkeit von der eingesetzten Menge Schwefel. Mit der Einarbeitung des elementaren Schwefels gemäß dem erfindungsgemäßen Verfahren lässt sich die Erniedrigung der Glasübergangstemperatur auf etwa 1 bis 5°C verringern. Dies wirkt sich positiv auf die mechanischen Eigenschaften des Schaumstoffes aus.

Des Weiteren können der Styrolpolymerschmelze weitere Additive, wie Keimbildner, Füllstoffe, Weichmacher, lösliche und unlösliche anorganische und/oder organische Farbstoffe und Pigmente in üblichen Mengen zugegeben werden.

Bevorzugt werden der Styrolpolymerschmelze athermane Verbindungen als IR-Absorber zugegeben. Als athermane Verbindungen eigenen sich beispielsweise synthetischer oder natürlicher Graphit, Ruß, Petrolkoks, Graphen oder Aktivkohle. Diese werden in Mengen von 0,5 bis 25 Gew.-%, bevorzugt 1 bis 15 Gew.-%, besonders bevorzugt 3 bis 8 Gew.-%, bezogen auf Styrolpolymer, eingesetzt werden.

Gegenstand der Erfindung ist auch die Verwendung einer Mischung von elementarem Schwefel und einer oder mehrerer athermaner Verbindungen in Styrolpolymerschaumstoffen.

Besonders bevorzugt wird der elementare Schwefel in dem erfindungsgemäßen Verfahren vor der Einarbeitung in die Styrolpolymerschmelze mit einer oder mehreren athermanen Verbindungen im Gewichtsverhältnis Schwefel: athermane Verbindung im Bereich von 10:1 bis 1:10, bevorzugt 3:1 bis 1:6, besonders bevorzugt 1:1 bis 1:3 vorgemischt. Durch das Vormischen des elementaren Schwefels mit athermanen Verbindungen, wie Graphit kann die Geruchsbelästigung verringert werden. Besonders bevorzugt erfolgt das Vermischen von Graphit und Schwefel bereits vor der Zugabe in die Polymerschmelze. Durch den Zusatz von athermanen Verbindungen können Schaumstoffformteile und Schaumstoffblöcke erhalten werden, die die Wärmeleitfähigkeitsklasse WLG 032 nach DIN 18164 erreichen.

In dem erfindungsgemäßen Verfahren werden bevorzugt keine halogenierten Verbindungen als Flammschutzmittel eingesetzt.

Das Brandverhalten kann durch die zusätzliche Zugabe phosphorhaltiger Flammschutzmittel, wie Triphenylphosphat oder Isosorbitoltetraphenylphosphat (WO 2011/083009), auch bei geringen Schwefelmengen verbessert werden. Bevorzugt werden 0,5 bis 3 Gewichtteile, besonders bevorzugt 1 bis 2 Gewichtsteile der phosphorhaltigen Flammschutzmittel auf 100 Gewichtsteile Styrolpolymer eingesetzt. Diese werden bevorzugt ebenfalls bei einer Temperatur (Einarbeitungstemperatur) im Bereich von 170 bis 220 °C, bevorzugt im Bereich von 180 bis 215 °C, besonders bevorzugt im Bereich von 190 bis 210 °C eingearbeitet.

Nach dem erfindungsgemäßen Verfahren können je nach dem, wie die Styrolpolymerschmelze weiterverarbeitet wird, sowohl Partikelschaumstoffe durch Vorschäumen und Versintern von expandierbaren Styrolpolymerisaten als auch Extrusionsschaumstoffe erhalten werden.

Die nach dem erfindungsgemäßen Verfahren erhältlichen expandierbaren Styrolpolymerisate enthalten ein Treibmittel. Als Treibmittel, eigenen sich die üblicherweise in EPS eingesetzten physikalische Treibmittel, wie aliphatische oder cycloaliphatische C₁-C₆-Kohlenwasserstoffe, Alkohole, Ketone, Ether, halogenierte Kohlenwasserstoffe oder Mischungen davon. Bevorzugt wird iso-Butan, n-Butan, iso-Pentan, n-Pentan oder Mischungen davon eingesetzt. Der Treibmittelanteil beträgt in der Regel 1 bis 15 Gew.-%, bevorzugt 2 bis 10 Gew.-%, besonders bevorzugt 3 bis 7 Gew.-%, bezogen auf das expandierbare Styrolpolymerisat.

Zur Herstellung der Extrusionsschaumstoffe auf Basis von Styrolpolymeren können die üblicherweise in Extrusionsschaumstoffen eingesetzten physikalische Treibmittel, wie aliphatische oder cycloaliphatische C₁-C₆-Kohlenwasserstoffe, Alkohole, Ketone, Ether, halogenierte Kohlenwasserstoffe, Kohlendioxid, Stickstoff oder Mischungen davon eingesetzt. Bevorzugt wird Kohlendioxid alleine oder zusammen mit Alkoholen oder Ketonen als Cotreibmittel eingesetzt. Der Treibmittelanteil beträgt in der Regel 1 bis 15 Gew.-%, bevorzugt 2 bis 10 Gew.-%, besonders bevorzugt 3 bis 7 Gew.-%, bezogen auf die treibmittelhaltige Styrolpolymerschmelze.

Expandierbaren Styrolpolymergranulaten (EPS) lassen sich beispielsweise erhalten, wenn die Styrolpolymerschmelze nach der Einarbeitung des elementaren Schwefels und gegebenenfalls athermanen Verbindungen und/oder weiteren Additiven mit einem Treibmittel, bevorzugt mit einem C₁-C₆-Kohlenwasserstoff, insbesondere n-Pentan, iso-Pentan oder Mischungen davon, imprägniert und unter Druck granuliert wird. Hierfür wird in der Regel ein Unterwassergranulator (UWG) eingesetzt. Ein derartiges Verfahren ist beispielsweise in WO 2003/106544 beschrieben.

Zur Verbesserung der Expandierbarkeit und Verringerung der Zykluszeit bei der anschließenden Formteilherstellung können die expandierbaren Styrolpolymerisate durch Zusatz von Nukleierungsmitteln, wie Talk und Hohlräume bildende Cotreibmittel, insbesondere Kohlenstoffdioxid oder Stickstoff, wie in WO 2012/062682 beschrieben, vornukleiert werden. Durch die Vornukleierung kann auch der Treibmittelanteil verringert werden und die Zellstruktur kontrolliert werden.

Nach einem weiteren Verfahren lassen sich expandierbare Styrolpolymergranulate erhalten, indem man die Styrolpolymerschmelze nach der Einarbeitung des elementaren Schwefels und gegebenenfalls athermanen Verbindungen und/oder weiteren Additiven granuliert und die Granulate anschließend mit einem Treibmittel, bevorzugt mit einem C₁-C₆-Kohlenwasserstoff , insbesondere n-Pentan, iso-Pentan oder Mischungen davon, imprägniert. Hierfür werden die Granulate in der Regel in einer wässrigen Suspension mit dem Treibmittel in einem Druckreaktor beaufschlagt und bis knapp unter die Glasübergangstemperatur erwärmt. Wenn zusätzlich vor oder während der Treibmittelimprägnierung monomeres Styrol zudosiert wird, kann das Granulat als Saat für eine Saatpolymerisation, beispielsweise wie in WO 2010/06631 beschrieben, verwendet werden.

Die expandierbaren Styrolpolymergranulate weisen in der Regel einen mittleren Durchmesser im Bereich von 0,2 bis 2 mm auf. Zur Verbesserung der Verarbeitbarkeit können die fertigen expandierbaren Styrolpolymergranulate mit Glycerinester, Antistatika oder Antiverklebungsmittel beschichten werden.

Die nach dem erfindungsgemäßen Verfahren erhältlichen expandierbaren Styrolpolymergranulate können in einem Vorschäumer mit Dampf oder Heißluft zu Schaumstoffpartikeln vorgeschäumt und anschließend zu Schaumstoffblöcken verarbeitet werden. Die Dichte der Schaumstoffpartikel und der Schaumstoffblöcke liegt in der Regel im Bereich von 10 bis 100 kg/m³, bevorzugt im Bereich von 15 bis 30 kg/m³.

Zur Herstellung von Extrusionsschaumstoffen auf Basis von Styrolpolymeren (XPS) kann die Styrolpolymerschmelze nach der Einarbeitung des elementaren Schwefels und gegebenenfalls athermanen Verbindungen und/oder weiteren Additiven mit einem Treibmittel, vorzugsweise Kohlendioxid oder HFC's und gegebenenfalls zusätzlichen Cotreibmitteln, imprägniert und unter Aufschäumen durch eine Düse extrudiert werden. Das Aufschäumen zu Schaumstoffplatten erfolgt vorzugsweise durch Extrusion in eine Umgebung unter Atmosphärendruck durch eine Schlitzdüse mit anschließendem Kalibrator.

Die nach dem erfindungsgemäßen Verfahren erhältlichen Extrusionsschaumstoffe weisen bevorzugt eine Dichte im Bereich von 10 bis 200 kg/m³, besonders bevorzugt im Bereich von 20 bis 50 kg/m³ auf. Sie sind in der Regel zu mehr als 90 %, bevorzugt zu 95 bis 100% geschlossenzellig.

Das erfindungsgemäße Verfahren ermöglicht mit geringen Schwefelanteilen einen wirksamen Flammschutz in Styrolpolymerschaumstoffen ohne die mechanischen Eigenschaften nachteilig zu beeinflussen. Die Styrolpolymerschaumstoffe können als Verpackungsmaterial, für Bauanwendungen, als Verbundformteil, in der Automobilindustrie, im Boots- und Schiffsbau, Windkraft, Wärmedämmung verwendet werden.

### Beispiele

Eingesetzte Rohstoffe:

| | |
|---|---|
| PS 158K Q4 | Polystyrol mit einem MVR (200 °C, 5 kg) von 3 ml/10 min und einer Vicat-Erweichungstemperatur (VST/A/50) von 106 °C (Handelsprodukt der Styrolution GmbH) |
| Pentan S: | Mischung aus 80 Gew.-% n-Pentan und 20 wt% iso-Pentan der Firma Haltermann |
| Graphit | Kommerziell erhältlich in verschiedenen Reinheitsgraden und von verschiedenen Abbaugebieten bspw. von der Graphit Kropfmühl AG, der Superior Graphite, der Richard Anton KG oder der Possehl Erzkontor GmbH. |
| Schwefel | Kommerziell erhältlich von Sigma-Aldrich |
| FR1 | Triphenylphosphat, kommerzielle erhältlich von Sigma-Aldrich |
| FR2 | Poly-[Resorcinol bis(diphenyl phosphat)], kommerziell erhältlich als Fyrolflex RDP von der Firma ICL |
| FR3 | Isosorbitoltetraphenylphosphat, hergestellt nach W02011/083009. |
| HBCD | Hexabromcyclododecan, Handelsprodukt der Firma ICL mit TGA %WT.Loss von 2 % @ 243 °C |

Herstellung einer Schwefel-Graphitmischung (Mengenverhältnisse 1:1 Gew.%):

In einem 5 l Zweihalskolben, ausgerüstet mit einem KPG-Rührer, wurden 200 g Graphit und 200 g elementarer Schwefel vorgelegt und anschließend durch Starten des Rührmechanismus homogen miteinander vermischt. Nach ca. 30 min wurden schrittweise über einen Zeitraum von 2 h weitere jeweils 300 g Graphit und elementarer Schwefel hinzugegeben. Nach erfolgter Zugabe wurde das Pulver für weitere 2 h zur vollständig homogenen Vermischung gerührt.

### Beispiele 1 - 10 und Vergleichsversuche V1 - V16:

Polystyrol PS 158 K wurde in einem Extruder aufgeschmolzen, mit den in Tabelle 1 angegebenen Mengen an Additiven vermischt, bei den in Tabelle 1 angegebenen Einarbeitungstemperaturen bei einer Verarbeitungszeit von 20 min. homogen eingemischt und anschließend granuliert. Die Mengenangaben in Tabelle 1 beziehen sich auf die Gewichtsanteile an Additiven, die 100 Teilen Polystyrol zugegeben wurden.

Die abgekühlten Granulate wurden in Dichlormethan gelöst und zum langsamen Verdampfen des Lösungsmittels bei Raumtemperatur für 24 h gelagert. Anschließend wurden die noch Rest-Dichlormethan enthaltenden Proben bei ca. 110 °C für 1 h gelagert wodurch sich - hervorgerufen durch das Resttreibmittel - ein Schaumkörper bildete. Die Dichten der erhaltenen Schaumkörper lagen zwischen 10 und 60 g/l.

Die Ermittlung des Brandverhaltens der Schaumkörper erfolgte durch die Bestimmung der Verlöschzeit nach DIN 4102. Proben mit einer Verlöschzeit unter 20 sec sind selbstverlöschend

Der Geruch der Schaumkörper wurde von einer Gruppe von drei Testpersonen nach dem folgenden Benotungssystem bewertet:
- 1:: kein Geruch
- 2:: geringer Geruch
- 3:: mittelstarker Geruch
- 4:: starker Geruch

**Tabelle 1: Additive, Einarbeitungstemperatur und Eigenschaften der Proben aus den Beispielen 1 - 10 und Vergleichsversuchen V1 - V16**

| Bsp. | Schwefel [Gew.-Teile] | Graphit [Gew.-Teile] | Flammschutzmittel [Gew.-Teile] | Einarbeitungstemp. [°C] | Verlöschzeit [sec] | Geruch [Note] |
|---|---|---|---|---|---|---|
| V1 | | - | 2,0 HBCD | 165 | 5 | 1 |
| V2 | 1,0 | - | | 165 | > 20 | 3 |
| V3 | 3,0 | - | | 165 | > 20 | 3 |
| V4 | 5,0 | - | | 165 | > 20 | 3 |
| V5 | | | 1,0 FR1- | 165 | > 20 | 1 |
| V6 | 3,0 | | 1,5 FR1 | 165 | 12 | 3 |
| V7 | | | 1,0 FR1- | 165 | > 20 | 1 |
| V8 | 3,0 | | 1,5 FR2 | 165 | 13 | 3 |
| V9 | | | 1,0 FR3- | 165 | > 20 | 1 |
| V10 | 3,0 | | 1,0 FR3 | 165 | 9 | 3 |
| V11 | 5,0 | - | | 200 | 10 | 4 |
| V12 | 5,0 | - | | 220 | 8 | 4 |
| V13 | 3,0 | - | | 200 | 14 | 4 |
| V14 | 3,0 | - | | 220 | 11 | 4 |
| V15 | 3,0 | 3,0 | | 140 | > 20 | 1 |
| V16 | 3,0 | 3,0 | | 160 | > 20 | 1 |
| 1 | 5,0 | 5,0 | | 200 | 11. | 1-2 |
| 2 | 5,0 | 5,0 | | 220 | 9 | 1-2 |
| 3 | 3,0 | 3,0 | | 180 | 17 | 1-2 |
| 4 | 3,0 | 3,0 | | 200 | 14 | 1-2 |
| 5 | 3,0 | 3,0 | | 220 | 12 | 1-2 |
| 5 | 3,0 | 3,0 | 1,5 FR1 | 200 | 8 | 1-2 |
| 6 | 3,0 | 3,0 | 1,5 FR1 | 220 | 5 | 1-2 |
| 7 | 3,0 | 3,0 | 1,5 FR2 | 200 | 7 | 1-2 |
| 8 | 3,0 | 3,0 | 1,5 FR2 | 220 | 4 | 1-2 |
| 9 | 3,0 | 3,0 | 1,0 FR3 | 200 | 5 | 1-2 |
| 10 | 3,0 | 3,0 | 1,0 FR3 | 220 | 4 | 1-2 |

### Beispiele 11 bis 13 und Vergleichsversuche V17 - V20

Gewöhnlich führt das Einbringen von Schwefel in Polystyrol-Schaumstoff zu einer signifikanten Verringerung des Tg, und zwar um ca. 1,7 °C/%. Durch die erfindungsgemäße, thermische Vorbehandlung des Schwefels lässt sich dieser Effekt signifikant verringern, was von entscheidender Bedeutung für die mechanischen Eigenschaften der Produkte ist.

Die Vergleichsversuche V17 bis V20 zeigen, dass die Einarbeitung von 1 bis 5 Gew.-% elementaren Schwefels (S₈) in eine Polystyrolschmelze (PS 158K Q4) bei niedrigen Temperaturen zu einer Erniedrigung der Glasübergangstemperatut Tg führt. Die Verweilzeit bei der Einarbeitungstemperatur betrug 30 Minuten.

**Tabelle 2 Absenkung der Glasübergangstemperatur Tg in Abhängigkeit der Einarbeitungstemperatur**

| Beispiel | Schwefel [Gew.-%] | Tg [°C] | Einarbeitungstemperatur [°C] |
|---|---|---|---|
| V17 | - | 103 | - |
| V18 | 1 | 101 | 120 |
| V19 | 3 | 97 | 120 |
| V20 | 5 | 93 | 120 |
| 11 | 1 | 102 | 220 |
| 12 | 3 | 99 | 220 |
| 13 | 5 | 99 | 220 |

## Patentansprüche

1. Verfahren zur Herstellung von Schwefel als Flammschutzmittel enthaltenden, expandierbaren Styrolpolymergranulaten oder Extrusionsschaumstoffen auf Basis von Styrolpolymeren, **dadurch gekennzeichnet, dass** elementarer Schwefel und mindestens eine athermane Verbindung in eine Styrolpolymerschmelze bei einer Temperatur im Bereich von 170 bis 220°C eingearbeitet werden.

2. Verfahren nach Anspruch 1, **dadurch gekennzeichnet, dass** 1 - 5 Gewichtteile elementarer Schwefel auf 100 Gewichtsteile Styrolpolymer eingesetzt werden.

3. Verfahren nach Anspruch 1 oder 2, **dadurch gekennzeichnet, dass** der elementare Schwefel vor dem Einarbeitung in die Styrolpolymerschmelze mit einer oder mehreren athermanen Verbindungen im Gewichtsverhältnis Schwefel: athermane Verbindung im Bereich von 10:1 1 bis 1:10 vorgemischt wird.

4. Verfahren nach einem der Ansprüche 1 bis 3, **dadurch gekennzeichnet, dass** keine halogenierte Verbindung als Flammschutzmittel eingesetzt wird.

5. Verfahren nach einem der Ansprüche 1 bis 4, **dadurch gekennzeichnet, dass** zusätzlich zum elementaren Schwefel 0,5 - 3 Gewichtteile eines phosphorhaltigen Flammschutzmittels auf 100 Gewichtsteile Styrolpolymer eingesetzt wird.

6. Verfahren zur Herstellung von expandierbaren Styrolpolymergranulaten nach einem der Ansprüche 1 bis 5, **dadurch gekennzeichnet, dass** die Styrolpolymerschmelze nach der Einarbeitung des elementaren Schwefels mit einem C₁-C₆-Kohlenwasserstoff als Treibmittel imprägniert und unter Druck granuliert wird.

7. Verfahren zur Herstellung von expandierbaren Styrolpolymergranulaten nach einem der Ansprüche 1 bis 5, **dadurch gekennzeichnet, dass** die Styrolpolymerschmelze granuliert wird und die Granulate anschließend mit einem C₁-C₆-Kohlenwasserstoff als Treibmittel imprägniert werden.

8. Verfahren zur Herstellung von Extrusionsschaumstoffen auf Basis von Styrolpolymeren nach einem der Ansprüche 1 bis 5, **dadurch gekennzeichnet, dass** die Styrolpolymerschmelze mit einem Treibmittel imprägniert und unter Aufschäumen durch eine Düse extrudiert wird.

9. Expandierbare Styrolpolymergranulate erhältlich nach den Ansprüchen 6 oder 7.

10. Verwendung einer Mischung von elementarem Schwefel und ein oder mehrere athermaner Verbindungen in Styrolpolymerschaumstoffen
